Europäisches Patentamt

European Patent Office

Office européen des brevets

(11) Veröffentlichungsnummer: **0 406 568 B1**

# EUROPÄISCHE PATENTSCHRIFT

(45) Veröffentlichungstag der Patentschrift: **19.04.95**

(21) Anmeldenummer: **90110511.4**

(22) Anmeldetag: **02.06.90**

(51) Int. Cl.6: **C08L 77/00**, C08L 23/10, C08K 5/09, //(C08L23/10,77:00, C08K5:09),(C08L77/00,23:10, C08K5:09)

(54) **Thermoplastische Polypropylen-Polyamid-Formmassen hoher Zähigkeit, Steifigkeit und Wärmeformbeständigkeit, Verfahren zu ihrer Herstellung und ihre Verwendung.**

(30) Priorität: **10.06.89 DE 3918982**

(43) Veröffentlichungstag der Anmeldung:
**09.01.91 Patentblatt 91/02**

(45) Bekanntmachung des Hinweises auf die Patenterteilung:
**19.04.95 Patentblatt 95/16**

(84) Benannte Vertragsstaaten:
**BE CH DE ES FR GB IT LI NL**

(56) Entgegenhaltungen:
**EP-A- 0 235 876**
**EP-A- 0 245 966**
**EP-A- 0 262 796**

(73) Patentinhaber: **BASF Aktiengesellschaft**
**Carl-Bosch-Strasse 38**
**D-67063 Ludwigshafen (DE)**

(72) Erfinder: **Lausberg, Dietrich, Dr.**
**Nachtigalstrasse 32 a**
**D-6700 Ludwigshafen (DE)**
Erfinder: **Mueller, Wolfgang F., Dr.**
**Im Biengarten 45**
**D-6730 Neustadt (DE)**
Erfinder: **Seiler, Erhard, Dr.**
**Erpolzheimer Strasse 1**
**D-6700 Ludwigshafen (DE)**

**Beschreibung**

Die Erfindung betrifft ein verbessertes Verfahren zur Herstellung von Polypropylen-Polyamid-Formmassen.

Polypropylen-homo- und -copolymerisate - im folgenden auch abgekürzt PP genannt - besitzen im allgemeinen gute mechanische Eigenschaften, eine gute Verarbeitbarkeit und Wasserbeständigkeit. Die Anwendung von Polypropylenen wird jedoch begrenzt durch die unzureichende Wärmeformbeständigkeit, ungenügende Tieftemperaturzähigkeit und mangelhafte Beständigkeit gegen organische Lösungsmittel.

Dieser Mangel könnte durch den Zusatz von Polyamiden - im folgenden auch abgekürzt PA genannt -, das die genannten Eigenschaften in herausragendem Maße aufweist, zumindest vermindert oder egalisiert werden. Andererseits zeigt jedoch PA ein unerwünscht hohes Wasseraufnahmevermögen.

Insbesondere nachteilig ist jedoch die Unverträglichkeit von PP mit PA, so daß einfache Gemische kein technisch brauchbares Eigenschaftsniveau besitzen.

Mit Glasfasern verstärkte PP-PA-Zusammensetzungen werden in der DE-A-35 07 128 (US-A-4 613 647) beschrieben. Zur Verbesserung der Haftung zwischen dem unpolaren PP und den Glasfasern wird ein mit ungesättigten Carbonsäuren oder einem Anhydrid davon modifiziertes PP eingesetzt. Durch die Erhöhung der Anhaftung zwischen PP und Glasfasern wird jedoch das Aussehen von daraus hergestellten Formkörpern verschlechtert.

Zur Reduzierung des Glasfasergehalts und Verbesserung des Aussehens wurden deshalb PA, insbesondere Nylon-6 oder Nylon-66, und Glasfasern zu PP hinzugegeben. Derartige Zusammensetzungen, die aus PP, modifiziertem PP, einem üblichen PA, z.B. Nylon-6 oder Nylon-66, und Glasfasern bestehen, haben jedoch keine ausreichende mechanische Festigkeit und die Härte wird durch die Feuchtigkeitsabsorption der eingesetzten Nylontypen erheblich vermindert.

Nach Angaben der EP-A-200 184 konnte dieser Mangel durch die Verwendung eines speziellen PA, das durch Polykondensation von Metaxylendiamin und Adipinsäure hergestellt wurde (Nylon-MXD6) beseitigt werden. Nachteilig an dieser PP-Zusammensetzung ist, daß die Aufbaukomponenten schwer zugänglich sind und auch die mechanischen Eigenschaften, insbesondere die Tieftemperaturzähigkeit, unbefriedigend sind.

Unbefriedigend ist auch die Zähigkeit von thermoplastischen Formmassen aus 10 bis 90 Gew.% eines mit Säuregruppen modifizierten PP, gegebenenfalls nicht modifiziertem PP und 90 bis 10 Gew.% eines PA, die zusätzlich pro 100 Gew.-Teilen der Mischung 2 bis 30 Gew.-Teile eines Epoxygruppen aufweisenden Copolymeren enthalten und beschrieben werden in der EP-A-0 180 302.

Aus der EP-A-188 123 (US-A-4 615 941) sind Filme aus PP und PA bekannt, die als Haftvermittler Ethylenmethylacrylat, Ethylenacrylsäure, ein Jonomer, Ethylenvinylacetat, Anhydrid modifiziertes PP, Polyethyloxazoline oder Stearylstearamid enthalten. Obgleich über die Eigenschaften der Filme keine Angaben gemacht werden, so wird doch behauptet, daß das Polyamid in Form von Partikeln mit einer Größe von 8 μm oder kleiner in dem Film eingelagert sei. Durchgeführte Versuche zeigten jedoch, daß keiner der genannten Haftvermittler bei Formmassen zu einem brauchbaren Ergebnis führte.

In der EP-A-0 235 876 werden thermoplastische Mischungen beschrieben, die enthalten: 1 bis 95 Gew.% eines PA und 99 bis 5 Gew.% einer chemisch modifizierten Mischung aus einem Polyolefin und einem anderen Polymer, wobei die Mischung mit einer ungesättigten Carbonsäure oder einem Carbonsäureanhydrid modifiziert wurde. Derartige, mit Carbonsäure oder -anhydrid modifiziertes PP oder Polyethylen enthaltende Formmassen haben eine unbefriedigende Zähigkeit und, sofern sie modifiziertes Polyethylen enthalten, außerdem eine unbefriedigende Wärmeformbeständigkeit.

Die Aufgabe der vorliegenden Erfindung bestand darin, ein verbessertes Verfahren zur Herstellung von thermoplastischen PP-PA-Formmassen mit hoher Zähigkeit, Steifigkeit und Wärmeformbeständigkeit zur Verfügung zu stellen.

Diese Aufgabe konnte überraschenderweise gelöst werden durch Modifizierung von PP mit einer olefinisch ungesättigten Carbonsäure oder einem entsprechenden Carbonsäurederivat bei erhöhter Temperatur in einer üblichen Mischvorrichtung, anschließendes Vermischen des so modifizierten PP und PA und Verschmelzen der Komponenten.

Gegenstand der Erfindung ist ein Verfahren zur Herstellung von Polypropylen-Polyamid-Formmassen, bestehend aus, jeweils bezogen auf 100 Gew.-Teile der Formmassen,

A) 10 bis 89,9 Gew.-Teilen mindestens eines Polypropylen-homo- und/oder -copolymerisats,

B) 10 bis 89,9 Gew.-Teilen mindestens eines Polyamids,

C) 0,1 bis 5,0 Gew.-Teilen mindestens einer olefinisch ungesättigten Carbonsäure und/oder eines olefinisch ungesättigten Carbonsäurederivats,

D) 0 bis 30,0 Gew.-Teilen eines schlagzäh modifizierenden Mittels und

2

E) 0 bis 60,0 Gew.-Teilen eines Verstärkungsmittels und/oder Zusatzstoffes.

durch Zusammenschmelzen der Aufbaukomponenten in einer üblichen Mischvorrichtung bei einer Temperatur im Bereich von 200 bis 300°C, dadurch gekennzeichnet, daß man, bezogen auf 100 Gew.-Teile der Formmassen, in einer ersten Reaktionsstufe, die Komponenten A) und C) zusammenschmilzt und danach in einer zweiten Reaktionsstufe der erhaltenen modifizierten Polypropylen-homo- und/oder -copolymerisat-Schmelze die Komponente B) einverleibt und die Komponenten zusammenschmilzt.

Bevorzugte Ausführungsformen sind den Unteransprüchen zu entnehmen.

Zur stofflichen Seite der neuen, erfindungsgemäßen PP-PA-Formmassen, deren Herstellung und ihre Verwendung ist im einzelnen das folgende auszuführen:

A) Geeignete Polypropylene sind aus der Polymerchemie bekannt, werden z.B. im Kunststoff-Handbuch, Band IV, Polyolefine, herausgegeben von R. Vieweg, A. Schley und A. Schwarz, Carl Hanser Verlag, München, 1969, beschrieben und sind im Handel erhältlich, so daß sich nähere Angaben praktisch erübrigen.

Anwendung finden z.B. Polypropylenhomopolymerisate, insbesondere solche, die durch Polymerisation von Propylen in Gegenwart eines Ziegler-Natta-Katalysatorsystems hergestellt werden und einen Schmelzindex MFI von 0,1 bis 10 g/10 min bei 190°C und 2,16 kg besitzen und einen Zug-E-Modul von größer $30 N/mm^2$ aufweisen.

Geeignet sind jedoch auch Copolymerisate, hergestellt z.B. durch statistische Copolymerisation oder Blockcopolymerisation, aus Propylen und Ethylen, α-Olefinen, wie z.B. Buten-1, Penten-1, 3-Methylpenten-1, Hexen-1, Hepten-1 oder Octen-1 oder Dienen, wie z.B. Norbornadien oder Dicyclopentadien, mit einem Propylengehalt von größer als 80 %, einem Zug-E-Modul von größer als $500 N/mm^2$ und einem Schmelzpunkt von über 155°C.

Besonders bevorzugt verwendet werden Blockcopolymerisate aus Propylen und Ethylen mit einem Kristallitschmelzpunkt von über 160°C, einem E-Modul von größer als $600 N/mm^2$ und einem Gehalt an Ethyleneinheiten von 3 bis 20 Gew.%, bezogen auf das Gesamtgewicht des Copolymerisats.

B) Als Komponente (B) enthalten die erfindungsgemäßen thermoplastischen PP-PA-Formmassen ein Polyamid oder Mischungen aus mehreren Polyamiden. Grundsätzlich in Betracht kommen teilkristalline und amorphe PA, wobei jedoch teilkristalline PA bevorzugt Anwendung finden, da die daraus hergestellten Formmassen in der Regel solchen aus amorphen PA hinsichtlich der Wärmeform- und Spannungsrißbeständigkeit überlegen sind. Erfindungsgemäß einsetzbare PA sind an sich bekannt und umfassen z.B. PA mit Molekulargewichten von 5.000 und mehr, vorzugsweise von 5.000 bis 70.000 und insbesondere von 10.000 bis 65.000, wie sie z.B. in den US-A-2 071 250, 2 071 251, 2 130 523, 2 130 948, 2 241 322, 2 312 966, 2 512 906 und 3 393 210 beschrieben werden.

Die PA können z.B. hergestellt werden durch Kondensation äquimolarer Mengen einer gesättigten Dicarbonsäure mit 4 bis 12 Kohlenstoffatomen, vorzugsweise 6 bis 12 Kohlenstoffatomen, mit einem Diamin, welches 4 bis 14 Kohlenstoffatome aufweist, durch Kondensation von Ω-Aminocarbonsäuren oder durch Polyaddition von Lactamen. Beispiele für PA sind Polyhexamethylenadipinsäureamid (Nylon 66), Polyhexamethylenazaleinsäureamid (Nylon 69), Polyhexamethylensebacinsäureamid (Nylon 610), Polyhexamethylendodecandisäureamid (Nylon 612), die durch Ringöffnung von Lactamen erhaltenen PA, wie Polycaprolactam, Polylaurinsäurelactam, ferner Poly-11-aminoundecansäure und Di-(p-aminocyclohexyl)-methandodecandisäureamid. Es ist auch möglich, gemäß der Erfindung PA zu verwenden, die durch Copolykondensation von mindestens zwei der oben genannten Polymeren oder ihrer Aufbaukomponenten hergestellt worden sind, z.B. ein Copolymeres aus Adipinsäure, Isophthalsäure und Hexamethylendiamin. Vorzugsweise sind die PA linear und haben Schmelzpunkte von mehr als 200°C, vorzugsweise von 205 bis 310°C.

Bevorzugt angewandte PA sind Polyhexamethylenadipinsäureamid, Polyhexamethylensebacinsäureamid und Polycaprolactam. Die PA weisen im allgemeinen eine relative Viskosität von 2,5 bis 5, vorzugsweise von 2,8 bis 4,5 auf, bestimmt an einer 1 gew.%igen Lösung in $H_2SO_4$ bei 23°C, was einem Molekulargewicht (Gewichtsmittelwert) von etwa 15.000 bis 45.000 entspricht. Selbstverständlich können auch Mischungen aus zwei oder mehreren PA eingesetzt werden. Der Anteil des PA (B) an den erfindungsgemäßen PP-PA-Formmassen beträgt zweckmäßigerweise, wie bereits ausgeführt wurde, 10 bis 89,9 Gew.%, bezogen auf das Gesamtgewicht. PP-PA-Formmassen mit einem Gehalt an PA (B) von 15 bis 75 Gew.%, insbesondere von 25 bis 70 Gew.% werden besonders bevorzugt.

C) Als erfindungswesentliche Aufbaukomponente enthalten die neuen PP-PA-Formmassen zur Modifizierung von vorzugsweise PP oder gegebenenfalls Mischungen aus PP und einem schlagzäh modifizierenden Mittel (D) mindestens eine olefinisch ungesättigte Carbonsäure, mindestens ein olefinisch ungesättigtes Carbonsäurederivat oder Mischungen davon in einer wirksamen Menge, vorzugsweise in einer Menge von 0,1 bis 5 Gew.-Teilen, insbesondere von 0,2 bis 2 Gew.-Teilen, bezogen auf 100 Gew.-Teile

3

der PP-PA-Formmasse. Als geeignete Carbonsäuren und -derivate seien beispielhaft genannt: olefinisch ungesättigte Monocarbonsäuren und die entsprechenden tert.-Butylester, wie z.B. Acrylsäure, Acrylsäure-tert.butylester, Methacrylsäure und Methacrylsäure-tert.butylester, olefinisch ungesättigte Dicarbonsäuren und die entsprechenden Mono- und/oder Di-tert.-butylester, wie z.B. Itaconsäure, Itaconsäuremono- oder di-tert.butylester, Fumarsäure-mono- oder di-tert.butylester, Maleinsäure, Maleinsäure-mono- oder -di-tert.butylester, und olefinisch ungesättigte Dicarbonsäureanhydride, wie z.B. Maleinsäureanhydrid. Die erfindungsgemäß geeigneten Carbonsäuren und -derivate können einzeln oder als Mischungen eingesetzt werden. Verwendung finden vorzugsweise Itaconsäure und insbesondere Fumarsäure und Maleinsäureanhydrid.

D) Neben den Aufbaukomponenten (A) bis (C) können die erfindungsgemäßen PP-PA-Formmassen zur Verbesserung der Schlagzähigkeit gegebenenfalls schlagzäh modifizierende Mittel, zweckmäßigerweise schlagzäh modifizierende Elastomere, enthalten. Schlagzähigkeitsverbessernde Elastomere für PA und PP sind dem Fachmann bekannt. Beispielhaft genannt seien die Kautschuke auf Ethylen-, Propylen-, Butadien- oder Acrylatbasis oder aus Mischungen dieser Monomeren.

Geeignete schlagzäh modifizierende Elastomere werden z.B. beschrieben in Methoden der organischen Chemie (Houben-Weyl), Band XIV/1, Makromolekulare Chemie (Georg-Thieme-Verlag, Stuttgart, 1961), Seiten 390 bis 406 oder in der Monographie von C.B. Bucknal, "Toughened Plastics" (Applied Science Publishers, London, 1977).

Einige bevorzugt angewandte Arten solcher Elastomerer werden im folgenden beispielhaft beschrieben:

Als bevorzugt eingesetzte Gruppe sind die sogenannten Ethylen-Propylen (EPM) bzw. Ethylen-Propylen-Dien-(EPDM)-kautschuke zu nennen, die zweckmäßigerweise ein Verhältnis von Ethylenresten zu Propylenresten im Bereich von 20:80 bis 80:20, vorzugsweise 40:60 bis 65:35, aufweisen.

Diese Kautschuke können ebenfalls mit olefinisch ungesättigten Carbonsäuren und/oder -derivaten, wie sie unter (C) genannt sind, modifiziert sein.

Die Mooney-Viskositäten (MLI + 4/100 °C) solcher unvernetzter EPM- bzw. EPDM-Kautschuke, deren Gelgehalte im allgemeinen unter 1 Gew.% betragen, liegen bevorzugt im Bereich von 25 bis 100, insbesondere von 35 bis 90 (gemessen am großen Rotor nach 4 Minuten Laufzeit bei 100 °C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie z.B. Penta-1,4-dien, Hexa-1,4-dien, 2,5-Dimethylhexa-1,5-dien, Hepta-1,4-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder Mischungen davon genannt. Bevorzugt angewandt werden Hexa-1,5-dien, Ethyliden-Norbornen und Dicyclopentadien. Der Diengehalt der EPDM-Kautschuke beträgt vorzugsweise 0,5 bis 10, insbesondere 1 bis 8 Gew.%, bezogen auf das Gesamtgewicht des Kautschuks.

Weiterhin sind als bevorzugt angewandte schlagzäh modifizierende Elastomere (D) Pfropfcopolymerisate mit Butadien, Butadien-Styrol-, Butadien-Acrylnitril-Copolymerisaten oder Acrylestern als Pfropfgrundlage zu nennen, wie sie z.B. in den DE-A-16 94 173 (US-A-3 564 077) und DE-A-23 48 377 (US-A-3 919 353) beschrieben werden.

Von diesen kommen insbesondere die sogenannten ABS-Polymerisate in Betracht, wie sie in den DE-A-20 35 390, DE-A-22 48 242 und der EP-A-22 216 beschrieben werden, wobei solche gemäß EP-A-22 216 besonders bevorzugt sind.

Als Elastomere (D) können auch Pfropfpolymerisate aus

25 bis 98 Gew.%  eines Acrylatkautschuks mit einer Glasübergangstemperatur von unter -20 °C als Pfropfgrundlage

und

2 bis 75 Gew.%  eines copolymerisierbaren ethylenisch ungesättigten Monomeren, dessen Homo- bzw. Copolymerisate eine Glasübergangstemperatur von mehr als 25 °C aufweisen, als Pfropfauflage

eingesetzt werden.

Die Pfropfgrundlage sind Acrylat- bzw. Methacrylatkautschuke, wobei bis zu 40 Gew.% weiterer Comonomerer enthalten sein können. Die $C_1$-$C_8$-Ester der (Meth)acrylsäure sowie deren halogenierte Derivate wie auch aromatische Acrylsäureester und deren Mischungen werden bevorzugt eingesetzt. Als Comonomere in der Pfropfgrundlage seien Acrylnitril, Methacrylnitril, Styrol, $\alpha$-Methylstyrol, Acrylamide,

4

Methacrylamide sowie Vinyl-$C_1$-$C_6$-Alkylether angeführt.

Die Pfropfgrundlage kann unvernetzt oder teilweise oder vollständig vernetzt sein. Die Vernetzung wird vorteilhafterweise durch Copolymerisation mit 0,02 bis 5 Gew.%, vorzugsweise 0,05 bis 2 Gew.%, bezogen auf das Gewicht der Pfropfgrundlage, eines vernetzenden Monomeren mit mehr als einer Doppelbindung erzielt. Geeignete vernetzende Monomere werden z.B. in der DE-A-27 26 256 und der EP-A-50 265 beschrieben.

Bevorzugt angewandte, vernetzend wirkende Monomere sind z.B. Triallylcyanurat, Triallylisocyanurat, Triacryloylhexahydro-s-triazin und Trialkylbenzole.

Falls die vernetzenden Monomeren mehr als 2 polymerisierbare Doppelbindungen aufweisen, ist es vorteilhaft ihre Menge auf nicht mehr als 1 Gew.%, bezogen auf die Pfropfgrundlage, zu beschränken.

Besonders bevorzugte Pfropfgrundlagen sind Emulsionspolymerisate mit einem Gelgehalt von mehr als 60 Gew.% (bestimmt in Dimethylformamid bei 25°C nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A-50 262 beschrieben werden.

Als Pfropfmonomere eignen sich besonders Styrol, $\alpha$-Methylstyrol, Acrylnitril, Methacrylnitril und Methylmethacrylat oder ihre Mischungen, insbesondere solche aus Styrol und Acrylnitril im Gewichtsverhältnis 90:10 bis 50:50. Ferner können bis zu 20 Gew.-% Comonomere, z.B. die im folgenden unter (Dc) genannten Comonomeren eingesetzt werden.

Die Pfropfausbeute, d.h. der Quotient aus der Menge des aufgepfropften Monomeren und der Menge des eingesetzten Pfropfmonomeren liegt im allgemeinen im Bereich von 20 bis 80 %.

Kautschuke auf der Basis von Acrylaten, die beispielsweise als Elastomere (D) verwendet werden können, werden z.B. in der DE-A-24 44 584 und der DE-A-27 26 256 beschrieben.

Als bevorzugt verwendbare schlagzäh modifizierende Mittel (D) kommen ferner Ethylencopolymerisate in einer wirksamen Menge, beispielsweise in einer Menge von 0,5 bis 30 Gew.-Teilen, vorzugsweise 2 bis 25 Gew.-Teilen, bezogen auf 100 Gew.-Teile der PP-PA-Formmasse, in Betracht.

Geeignete Ethylencopolymerisate besitzen, bezogen auf das Gesamtgewicht, zweckmäßigerweise einen Ethylengehalt (a) von 50 bis 98 Gew.%, vorzugsweise von 60 bis 95 Gew.%, einen Alkyl(meth)-acrylatgehalt (b) von 1 bis 45 Gew.%, vorzugsweise 10 bis 35 Gew.% und einen Gehalt an einem weiteren Comonomeren von 1 bis 40 Gew.%, vorzugsweise 2 bis 20 Gew.%.

a) Das Monomere Ethylen ist in der Polymerchemie hinreichend bekannt, so daß sich nähere Ausführungen erübrigen.

b) Als Acrylate und/oder Methacrylate (b) mit 1 bis 8 C-Atomen, vorzugsweise 2 bis 8 C-Atomen im linearen oder verzweigten Alkylrest finden (Meth)acrylsäureester Verwendung, bei welchen die Estergruppen der polymerisierten (Meth)acrylateinheiten im gebildeten Ethylencopolymerisat unter den Reaktionsbedingungen zur Herstellung der PP-PA-Formmassen im wesentlichen nicht oder nur in untergeordnetem Maße mit dem Polyamid (B) reagieren. Beispielhaft genannt seien Methyl-, Ethyl-, n- und i-Propyl-, n- und i-Butyl-, n-Pentyl-, n-Hexyl-, 2-Ethylhexyl-, n-Heptyl- und n-Octylacrylat oder -methacrylat. Die Alkyl(meth)acrylate können einzeln oder in Form von Mischungen eingesetzt werden. Vorzugsweise Anwendung finden n-Butyl- und/oder 2-Ethylhexylacrylat.

c) Als Comonomere (c) kommen olefinisch ungesättigte Monomere in Betracht, die mit Ethylen und Alkyl(meth)acrylaten copolymerisierbar sind und eine reaktive Gruppe gebunden enthalten, welche im gebildeten Ethylencopolymerisat unter den Reaktionsbedingungen zur Herstellung der PP-PA-Formmassen mit dem Polyamid (B) reagiert, wobei die chemische Verknüpfung in einem solchen Ausmaße eintritt, daß der Ankopplungsgrad an das PA nach beendeter Reaktion größer als 0,03 ist und vorzugsweise zwischen 0,05 bis 1 und insbesondere 0,08 bis 0,8 liegt. Der Ankupplungsgrad ist hierbei definiert als das Verhältnis aus mit Toluol aus der PP-PA-Formmasse nicht extrahierbarem Ethylencopolymerisat zu der Gesamtmenge des eingesetzten Ethylencopolymerisats.

Als mit dem PA (B) reaktive Gruppen seien beispielsweise genannt, die Sulfo-, Sulfonyl-, Oxazolin-, Epoxidgruppe und vorzugsweise die Carboxyl-, tert.-Butylcarboxylat- und Carbonsäureanhydridgruppe.

Geeignete Comonomere (c) zur Herstellung der Ethylencopolymerisate sind beispielsweise olefinisch ungesättigte Monocarbonsäuren, wie z.B. Acrylsäure oder Methacrylsäure, und die entsprechenden tert.-Butylester, wie z.B. tert.-Butyl(meth)acrylat, olefinisch ungesättigte Dicarbonsäuren, wie z.B. Fumarsäure und Maleinsäure und die entsprechenden Mono- und/oder Di-tert.-Butylester, wie z.B. Fumarsäure-mono- oder -di-tert.butylester und Maleinsäure-mono- oder di-tert.-butylester, olefinisch ungesättigte Dicarbonsäureanhydride, wie z.B. Maleinsäureanhydrid, Sulfo- oder Sulfonylgruppen aufweisende olefinisch ungesättigte Monomere wie z.B. p-Styrolsulfonsäure, 2-(Meth)Acrylamido-2-methyl-propensulfonsäure oder 2-Sulfonyl(meth)acrylat, Oxazolingruppen aufweisende olefinisch ungesättigte Monomere, wie z.B.

Vinyloxazoline und Vinyloxazolinderivate und Epoxidgruppen aufweisende olefinisch ungesättigte Monomere, wie z.B. Glycidyl(meth)acrylat oder Allylglycidylether.

Besonders bewährt haben sich als Comonomere (c) und daher vorzugsweise Anwendung finden Acrylsäure, Methacrylsäure, tert.-Butyl(meth)acrylat und/oder insbesondere Maleinsäureanhydrid.

Die genannten Comonomeren (c) können ebenso wie die Alkyl(meth)acrylate zur Herstellung des Ethylencopolymerisats einzeln oder in Form von Mischungen eingesetzt werden.

Die Herstellung der Ethylencopolymerisate kann nach an sich bekannten Verfahren erfolgen, vorzugsweise durch statistische Copolymerisation unter hohem Druck, z.B. von 200 bis 4.000 bar und erhöhter Temperatur z.B. im Bereich von ungefähr 120 bis 300 °C. Entsprechende Verfahren sind in Literatur-und Patentpublikationen beschrieben.

Der Schmelzindex geeigneter Ethylencopolymerisate liegt vorteilhafterweise im Bereich von 1 bis 80 g/10 min, vorzugsweise 2 bis 25 g/10 min (gemessen bei 190 °C und 2,16 kg Belastung nach DIN 53 735).

Die Elastomeren (D) weisen vorzugsweise eine Glasübergangstemperatur von unter -30 °C, insbesondere von unter -40 °C auf, was zu einer guten Schlagzähigkeit auch bei tiefen Temperaturen führt.

Die als schlagzäh modifizierende Mittel (D) beispielhaft genannten Elastomeren bzw. Kautschuke können sowohl einzeln als auch in Form von Mischungen eingesetzt werden.

E) Neben den Aufbaukomponenten (A) bis (C) sowie gegebenenfalls (D) können die erfindungsgemäßen PP-PA-Formmassen ferner Verstärkungsmittel und/oder Zusatzstoffe (E) enthalten. Der Anteil dieser Komponente (E) beträgt, wie bereits ausgeführt wurde, bis zu 60 Gew.-Teile, vorzugsweise bis zu 50 Gew.-Teile, bezogen auf 100 Gew.-Teile der PP-PA-Formmasse.

Als Verstärkungsmittel können verstärkend wirkende Füllstoffe wie z.B. Asbest, Kohle oder vorzugsweise Fasern, beispielsweise Kohlenstoff- oder insbesondere Glasfasern, die mit Haftvermittler und/oder Schlichten ausgerüstet sein können, Anwendung finden. Geeignete Glasfasern, die z.B. auch in Form von Glasgeweben, -matten, -vliesen und/oder vorzugsweise Glasseidenrovings oder geschnittener Glasseide aus alkaliarmen E-Gläsern mit einem Durchmesser von 5 bis 200 $\mu$m, vorzugsweise 8 bis 15 $\mu$m eingesetzt werden, weisen nach ihrer Einarbeitung in die PP-PA-Formmassen im allgemeinen eine mittlere Faserlänge von 0,05 bis 1 mm, vorzugsweise von 0,1 bis 0,5 mm auf.

Andere geeignete Füllstoffe sind z.B. neben den vorgenannten, Wollastonit, Calciumcarbonat, Magnesiumcarbonat, amorphe Kieselsäure, Calciumsilikat, Calciummetasilikat, Quarzmehl, Talkum, Koalin, Glimmer, Feldspat, Glaskugeln, Si- oder Bornitrid sowie Mischungen dieser Füllstoffe.

Als besonders vorteilhaft haben sich insbesondere Glasfasern herausgestellt, besonders dann, wenn eine hohe Wärmeformbeständigkeit gefordert ist.

Als geeignete Zusatzstoffe seien beispielsweise genannt: Radikalstarter, Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, Keimbildungsmittel und Weichmacher.

Bewährt haben sich radikalisch wirkende Startermoleküle, im folgenden Radikalstarter genannt, mit einer Zerfallstemperatur t 1/2 pro Stunde von größer als 140 °C, vorzugsweise von 145 bis 170 °C zur Beschleunigung der Reaktion der Komponenten (A) und gegebenenfalls (D) mit (C) in der Schmelze. Als derartige Radikalstarter, die üblicherweise in einer Menge von 0,1 bis 20 Gew.%, vorzugsweise von 0,1 bis 10 Gew.%, bezogen auf das Gewicht der Komponente (C), eingesetzt werden, kommen beispielsweise in Betracht: Cumolhydroperoxid, Di-tert.-Butylhydroperoxid, tert.-Butylhydroperoxid und Hexamethyl-cyclo-4,7-diperoxynonan.

Vorzugsweise Anwendung finden Cumolhydroperoxid und Hexamethyl-cyclo-4,7-diperoxynonan.

Oxidationsverzögerer und Wärmestabilisatoren, die den PP-PA-Formmassen gemäß der Erfindung zugesetzt werden können, sind z.B. Halogenide von Metallen der Gruppe I des periodischen Systems, z.B. Natrium-, Kalium-, Lithium-Halogenide, ggf. in Verbindung mit Kupfer-(I)-Halogeniden, z.B. Chloriden, Bromiden oder Iodiden. Ferner sind sterisch gehinderte Phenole, Hydrochinone, substituierte Vertreter dieser Gruppe und Mischungen derselben, vorzugsweise in Konzentrationen bis 1 Gew.%, bezogen auf das Gewicht der Formmasse, einsetzbar.

Beispiele für UV-Stabilisatoren sind verschiedene substituierte Resorcine, Salicylate, Benzotriazole und Benzophenone, die im allgemeinen in Mengen bis zu 2,0 Gew.%, bezogen auf das Gewicht der Formmasse, eingesetzt werden.

Gleit- und Entformungsmittel, die in der Regel ebenfalls in Mengen bis zu 1 Gew.%, bezogen auf das Gewicht der PP-PA-Formmasse zugesetzt werden, sind Stearinsäuren, Stearylalkohol, Stearinsäureester und -amide sowie die Fettsäureester des Pentaerythrits.

Ferner können organische Farbstoffe, wie Nigrosin, Pigmente, z.B. Titandioxid, Cadmiumsulfid, Cadmiumsulfidselenid, Phthalocyanine, Ultramarinblau oder Ruß zugesetzt werden. Keimbildungsmittel, wie Talkum, Calciumfluorid, Natriumphenylphosphinat, Aluminiumoxid oder feinteiliges Polytetrafluorethylen können in Mengen z.B. bis zu 5 Gew.%, bezogen auf die Aufbaukomponenten (A) bis (E) angewandt werden.

Die erfindungsgemäßen PP-PA-Formmassen werden bei Temperaturen im Bereich von 200 bis 300°C, vorzugsweise von 240 bis 300°C, und einer Gesamtverweilzeit von 30 bis 600 Sekunden, vorzugsweise von 40 bis 300 Sekunden, im geschmolzenen Zustand der Aufbaukomponenten (A) bis (C) sowie gegebenenfalls (D) in einer geeigneten Mischvorrichtung, beispielsweise einem Kneter, vorzugsweise einem Doppelschnecken- oder Preßspritzmischextruder, hergestellt. Zweckmäßigerweise wird die Modifizierung des PP (A) mit der olefinisch ungesättigten Carbonsäure und/oder dem Carbonsäurederivat (C) in der ersten Reaktionsstufe in Abwesenheit oder vorzugweise in Gegenwart mindestens eines Radikalstarters und vorteilhafterweise in Gegenwart mindestens eines schlagzäh modifizierenden Mittels durchgeführt.

Nach dem zweckmäßigsten und daher vorzugsweise angewandten Herstellungsverfahrens für die erfindungsgemäßen PP-PA-Formmassen werden, bezogen auf 100 Gew.-Teile der Formmasse, 10 bis 89,9 Gew.-Teile mindestens eines Polypropylen-homo- und/oder -Copolymerisats (A) und 0,1 bis 5,0 Gew.-Tei le mindestens einer olefinisch ungesättigten Carbonsäure, eines olefinisch ungesättigten Carbonsäurederivats oder Mischungen davon in Gegenwart eines Radikalstarters und vorzugsweise eines schlagzäh modifizierenden Mittels in einer ersten Reaktionszone eines Extruders, die der ersten Reaktions-Stufe entspricht, auf- und zusammengeschmolzen. Nach dem Passieren dieser Reaktionszone werden 10 bis 89,9 Gew.-Teile mindestens eines PA (B) sowie gegebenenfalls die restliche Menge oder die Gesamtmenge des schlagzäh modifizierenden Mittels (D) und gegebenenfalls Verstärkungsmittel und/oder Zusatzstoffe (E), beispielsweise über einen Seitenextruder oder eine Stopfschnecke der modifizierten PP-Schmelze einverleibt. In einer zweiten Reaktionszone des Extruders, die der zweiten Reaktionsstufe entspricht, werden die modifizierten PP-Schmelze der ersten Reaktionszone und die frisch zugeführten Aufbaukomponenten zu der erfindungsgemäßen PP-PA-Formmassen verschmolzen. Vorzugsweise wird die Verschmelzung der Komponenten in der ersten und zweiten Reaktionsstufe bei derselben Temperatur durchgeführt, wobei die Verweilzeit in der ersten Reaktionsstufe 20 bis 200 Sekunden, vorzugsweise 20 bis 100 Sekunden und in der zweiten Reaktionsstufe 10 bis 400 Sekunden, vorzugsweise 20 bis 400 Sekunden, beträgt. Die Schmelze der erhaltenen PP-PA-Formmasse wird danach extrudiert, abgekühlt und granuliert. Die erhaltenen Granulate können zwischengelagert oder direkt zur Herstellung von beispielsweise Folien oder vorzugsweise Formkörper verwendet werden.

Die erfindungsgemäßen PP-PA-Formmassen sind homogen und zeigen weder in der Schmelze noch im Granulat oder Formkörper eine Entmischung der Polymerkomponenten. Aus den PP-PA-Formmassen lassen sich leicht Formkörper mit guter Oberflächenbeschaffenheit, hoher Wärmeformbeständigkeit und verbesserter Schlagzähigkeit bei hoher Steifigkeit, insbesondere bei tiefen Temperaturen, z.B. bei Temperaturen von -40°C, herstellen. Die PP-PA-Formmassen eignen sich ferner zur Herstellung von Folien nach üblichen Verfahren.

Beispiele

Zur Herstellung der erfindungsgemäßen thermoplastischen PP-PA-Formmassen wurden in den Sei spielen 1 bis 20 und Vergleichsbeispielen I bis VIII folgende Aufbaukomponenten eingesetzt.

Polypropylen (A)

PP-A1:   Polypropylen-Blockcopolymerisat mit 6 Gew.% polymerisierten Ethyleneinheiten und einem MFI von 1,8 g/10 min, gemessen bei 230°C mit 2,16 kg Belastung nach DIN 53 735.
Das Polypropylen-polyethylen-Blockcopolymerisat besaß ein Zugmodul (+23°C) von 1300 N/mm² und einen Schmelzpunkt von 164°C (Novolen® 2300 HX der BASF AG).

PP-A2:   Polypropylen-Blockcopolymerisat mit 10 Gew.% polymerisierten Ethyleneinheiten.
Das Polypropylen-polyethylen-Blockcopolymerisat besaß einen MFI von 1,6, gemessen unter den vorgenannten Bedingungen, ein Zugmodul (+23°C) von 1200 N/mm² und einen Schmelzpunkt von 162°C (Novolen® 2500 HX der BASF AG)

PP-A3:   Polypropylen-Blockcopolymerisat mit 18 Gew.% polymerisierten Ethyleneinheiten.
Das Polypropylen-polyethylen-Blockcopolymerisat besaß einen MFI von 2,0, gemessen unter den vorgenannten Bedingungen, ein Zugmodul (+23°C) von 800 N/mm² und einen Schmelzpunkt von 160°C.

PP-A4:   Polypropylen, gepfropft mit 1,3 Gew.% Acrylsäure.
Das Polymerisat besaß einen MFI von 3,0, gemessen unter den vorgenannten Bedingungen, ein Zugmodul (+23°C) von 1400 N/mm$^2$ und einen Schmelzpunkt von 160°C.

Polyamid (B)

PA-B1:  Polycaprolactam mit einer relativen Viskosität von 3,5 (gemessen in 0,5 gew.%iger Lösung in Phenol/o-Dichlorbenzol im Gewichtsverhältnis 1:1 bei 25°C)

PA-B2:  Polyhexamethylensebacinsäureamid mit einer relativen Viskosität von 3,23 (gemessen wie unter PA-B1 beschrieben)

Komponente (C)

Olefinisch ungesättigte Carbonsäure oder -derivate

FS :  Fumarsäure

MSA:  Maleinsäureanhydrid

Komponente (D)

Als schlagzäh modifizierte Mittel wurden folgende Kautschuke eingesetzt:

D1:  Terpolymeres aus Ethylen, n-Butylacrylat und Acrylsäure im Gewichtsverhältnis 65:30:5, hergestellt durch Hochdruckpolymerisation analog den Angaben in der EP-A-0 106 999.
Das Terpolymere besaß einen MFI von 10 g/10 min, gemessen bei 190°C mit einer Belastung von 2,16 kg nach DIN 53 735.

D2:  Terpolymeres aus Ethylen, n-Butylacrylat und Maleinsäureanhydrid im Gewichtsverhältnis von 65:35:0,5, hergestellt wie unter D1 genannt.
Das Terpolymere besaß einen MFI von 12 g/10 min, gemessen bei 190°C mit einer Belastung von 2,16 kg.

D3:  Terpolymeres aus Ethylen, n-Butylacrylat und Glycidylmethacrylat im Gewichtsverhältnis von 67:30:3, hergestellt wie unter D1 genannt.
Das Terpolymere besaß einen MFI von 9 g/10 min, gemessen bei 190°C mit einer Belastung von 2,16 kg.

D4:  Pfropfkautschuk mit einer Pfropfgrundlage (75 Gew.-%) aus Poly-n-Butylacrylat, das mit Butandioldiacrylat umgesetzt wurde und einer Pfropfhülle (25 Gew.-%) aus einem Copolymeren aus Styrol, Acrylnitril und tert.-Butylacrylat (Gew.-Verhältnis 73:24:3), hergestellt durch Emulsionspolymerisation in an sich bekannter Weise. (Mittlerer Teilchendurchmesser $d_{50}$ = 420 nm).

D5:  Pfropfkautschuk mit einer Pfropfgrundlage aus Polybutadien (75 %) und einer Pfropfhülle (25 %) aus einem Copolymeren aus Styrol, Acrylnitril und tert.-Butylacrylat (Gew.-Verhältnis 73:24:3), hergestellt durch Emulsionspolymerisation in an sich bekannter Weise. (Mittlerer Teilchendurchmesser $d_{50}$ = 250 nm).
Der mittlere Teilchendurchmesser $d_{50}$ ist der Durchmesser, ober- und unterhalb dessen jeweils 50 Gew.-% der Teilchen liegen.

Verstärkungsmittel (E):

E:  Glasfaser Typ R 20 EX 4 der Firma European Owens Corning Fiberglas, B4651 Battice, Belgien

Radikalstarter:

CHP:  Cumolhydroperoxide

Herstellung der PP-PA-Formmassen:

Allgemeine Herstellungsvorschrift:

Die Aufbaukomponente (A) und (C) sowie gegebenenfalls der Radikalstarter wurden bei 23°C in einem Schnellmischer homogen gemischt, die Mischung in einem Zweischneckenextruder vom Typ ZSK 40, Werner und Pfleiderer, (Stuttgart) eingebracht, bei 260°C aufgeschmolzen und durch eine Reaktionszone von 14 D Länge extrudiert. Die Verweilzeit betrug ca. 40 Sekunden.

Mit Hilfe eines angeflanschten Seitenextruders vom Typ ZSK 30, Werner und Pfleiderer, wurde danach eine Schmelze aus den Komponenten (B) und (D) mit einer Temperatur von 260°C zugeführt.

In die vereinigten Schmelzen wurden gegebenenfalls die Verstärkungsfasern (E) mittels eines weiteren Seiteneinzugs eingebracht.

Nach einer Verweilzeit von 200 Sekunden wurden die PP-PA-Formmassen extrudiert, abgekühlt, granuliert und zu Prüfkörpern verspritzt.

An den Prüfkörpern wurden nach DIN-Normen die folgenden mechanischen Eigenschaften gemessen: Die Kerbschlagzähigkeit nach DIN 53753, die Schlagzähigkeit nach DIN 53453, die Zugfestigkeit nach DIN 53455, der Elastizitätsmodul nach DIN 53457 und die Wärmeformbeständigkeit Vicat B nach DIN 53 460. Die Konditionierung wurde bei 23°C und 50 % relativer Luftfeuchte über 30 Tage vorgenommen.

Die Art und Menge (Gew.%, bezogen auf das Gesamtgewicht der Formmassen) der Aufbaukomponenten und die an den Prüfkörpern gemessenen mechanischen Eigenschaften sind in den folgenden Tabellen 1 und 2 zusammengefaßt.

Tabelle 1 zeigt die mechanischen Eigenschaften der Prüfkörper, hergestellt in Abwesenheit oder unter Zusatz von schlagzäh modifizierenden Mitteln (D) sowie der Prüfkörper nach den Vergleichsbeispielen.

Die Prüfkörper in Tabelle 2 wurden in Abwesenheit eines schlagzäh modifizierenden Mittels (D) jedoch unter Zusatz des Verstärkungsmittels (E) hergestellt.

Tabelle 1

| Bsp. | Aufbaukomponenten | | | | | | | | | | mechanische Eigenschaften | | | | |
|---|---|---|---|---|---|---|---|---|---|---|---|---|---|---|---|
| | A | | B | | C | | D | | CHP | | E-Modul | | Kerbschlag-zähigkeit 23°C | Schlag-zähigkeit -40°C | Vicat B |
| | Menge [Gew.-T] | Art | Menge [Gew.-T] | Art | Menge [Gew.-T] | Art | Menge [Gew.-T] | Art | Menge [Gew.-T] | | trocken [N/mm$^2$] | feucht [N/mm$^2$] | [kJ/m$^2$] | [kJ/m$^2$] | [°C] |
| 1 | 49,5 | A1 | 50 | B1 | 0,5 | MSA | – | – | – | | 2050 | 1650 | 16 | o. Br.* | 105 |
| 2 | 49,5 | A2 | 50 | B1 | 0,5 | MSA | – | – | – | | 2000 | 1600 | 21 | o. Br. | 102 |
| 3 | 49,5 | A3 | 50 | B1 | 0,5 | MSA | – | – | – | | 1900 | 1500 | 34 | o. Br. | 92 |
| 4 | 49,5 | A2 | 50 | B2 | 0,5 | MSA | – | – | – | | 2100 | 1700 | 19 | o. Br. | 103 |
| 5 | 49,5 | A2 | 50 | B1 | 0,5 | FS | – | – | – | | 2000 | 1600 | 20 | o. Br. | 102 |
| 6 | 49,75 | A2 | 50 | B1 | 0,25 | MSA | – | – | – | | 2050 | 1650 | 22 | o. Br. | 103 |
| 7 | 79,6 | A2 | 20 | B1 | 0,4 | MSA | – | – | – | | 1400 | 1100 | 28 | o. Br. | 65 |
| 8 | 69,65 | A2 | 30 | B1 | 0,35 | MSA | – | – | – | | 1600 | 1350 | 25 | o. Br. | 81 |
| 9 | 39,8 | A2 | 60 | B1 | 0,2 | MSA | – | – | – | | 2300 | 1900 | 16 | o. Br. | 124 |
| 10 | 49,5 | A2 | 50 | B1 | 0,45 | MSA | – | – | 0,05 | | 2000 | 1600 | 22 | o. Br. | 101 |
| 11 | 49,5 | A2 | 40 | B1 | 0,5 | MSA | 10 | D1 | – | | 1600 | 1250 | 25 | o. Br. | 88 |
| 12 | 49,5 | A2 | 40 | B1 | 0,5 | MSA | 10 | D2 | – | | 1600 | 1200 | 31 | o. Br. | 89 |
| 13 | 49,5 | A2 | 40 | B1 | 0,5 | MSA | 10 | D3 | – | | 1600 | 1200 | 27 | o. Br. | 87 |
| 14 | 49,5 | A2 | 40 | B1 | 0,5 | MSA | 10 | D4 | – | | 1650 | 1300 | 30 | o. Br. | 93 |
| 15 | 49,5 | A2 | 40 | B1 | 0,5 | MSA | 10 | D5 | – | | 1650 | 1300 | 35 | o. Br. | 92 |

EP 0 406 568 B1

Tabelle 1 (Fortsetzung)

| Bsp. | Aufbaukomponenten | | | | | | | | | mechanische Eigenschaften | | | | |
| | A | | B | | C | | D | | CHP | E-Modul | | Kerbschlag- | Schlag- | Vicat B |
| | Menge | Art | Menge | Art | Menge | Art | Menge | Art | Menge | trocken | feucht | zähigkeit | zähigkeit | |
| | [Gew.-T] | | [Gew.-T] | | [Gew.-T] | | [Gew.-T] | | [Gew.-T] | | | 23°C | -40°C | |
| | | | | | | | | | | [N/mm$^2$] | [N/mm$^2$] | [kJ/m$^2$] | [kJ/m$^2$] | [°C] |
| Vergleichs-beispiele | | | | | | | | | | | | | | |
| I | 100 | A1 | – | – | – | – | – | – | – | 1300 | 1300 | 17 | 71 | 64 |
| II | 100 | A2 | – | – | – | – | – | – | – | 1200 | 1200 | 30 | 96 | 57 |
| III | 100 | A3 | – | – | – | – | – | – | – | 800 | 800 | 41 | o. Br. | 53 |
| IV | – | – | 100 | B1 | – | – | – | – | – | 2950 | 1400 | 5 | o. Br. | 199 |
| V | – | – | 100 | B2 | – | – | – | – | – | 3100 | 1500 | 4 | o. Br. | >200 |
| VI | – | – | 90 | B1 | – | – | 10 | D1 | – | 2600 | 1100 | 6 | o. Br. | 179 |
| VII | 50 | A2 | 50 | B1 | – | – | – | – | – | 2000 | 1600 | 1 | 15 | 104 |
| VIII | 50 | A4 | 50 | B1 | – | – | – | – | – | 2100 | 1700 | 2 | 26 | 103 |

* ohne Bruch

Tabelle 2

| Bsp. | Aufbaukomponenten | | | | | | | mechanische Eigenschaften | | |
|------|---------|-----|---------|-----|---------|-----|---------|--------------------|-----------------|-----------------------------|
| | A | | B | | C | | E | E-Modul | Zugfestigkeit | Schlagzähigkeit [23°C] |
| | Menge [Gew.-T] | Art | Menge [Gew.-T] | Art | Menge [Gew.-T] | Art | Menge [Gew.-T] | [N/mm²] | [N/mm²] | [kJ/m2] |
| 16 | 34,8 | A1 | 35 | B1 | 0,2 | MSA | 30 | 7700 | 108 | 25 |
| 17 | 34,8 | A2 | 35 | B1 | 0,2 | MSA | 30 | 7600 | 102 | 31 |
| 18 | 34,8 | A3 | 35 | B1 | 0,2 | MSA | 30 | 7400 | 98 | 33 |
| 19 | 34,8 | A2 | 35 | B2 | 0,2 | MSA | 30 | 7700 | 108 | 27 |
| 20 | 39,7 | A2 | 40 | B1 | 0,3 | MSA | 20 | 6100 | 94 | 34 |

**Patentansprüche**

1. Verfahren zur Herstellung von Polypropylen-Polyamid-Formmassen, bestehend aus, jeweils bezogen auf 100 Gew.-Teile der Formmassen,

12

A) 10 bis 89,9 Gew.-Teilen mindestens eines Polypropylen-homo- und/oder -copolymerisats,

B) 10 bis 89,9 Gew.-Teilen mindestens eines Polyamids,

C) 0,1 bis 5,0 Gew.-Teilen mindestens einer olefinisch ungesättigten Carbonsäure und/oder eines olefinisch ungesättigten Carbonsäurederivats,

10) 0 bis 30,0 Gew.-Teilen eines schlagzäh modifizierenden Mittels und

E) 0 bis 60,0 Gew.-Teilen eines verstärkungsmittels und/oder Zusatzstoffes.

durch Zusammenschmelzen der Aufbaukomponenten in einer üblichen Mischvorrichtung bei einer Temperatur im Bereich von 200 bis 300°C, dadurch gekennzeichnet, daß man, bezogen auf 100 Gew.-Teile der Formmassen, in einer ersten Reaktionsstufe, die Komponenten A) und C) zusammenschmilzt und danach in einer zweiten Reaktionsstufe der erhaltenen modifizierten Polypropylen-homo- und/oder -copolymerisat-Schmelze die Komponente B) einverleibt und die Komponenten zusammenschmilzt.

2. Verfahren nach Anspruch 1, dadurch gekennzeichnet, daß man die Komponenten A) und C) in Gegenwart eines Radikalstarters mit einer Zerfallstemperatur $t_{1/2}$ pro Stunde größer als 140°C in einer Menge von 0,1 bis 20 Gew.-%, bezogen auf das Gewicht der Komponente C) zusammenschmilzt.

3. Verfahren nach Anspruch 1, dadurch gekennzeichnet, daß man die Komponenten A) und C) in Gegenwart eines Radikalstarters ausgewählt aus der Gruppe Cumolhydroperoxid, Di-tert.-Butylhydroperoxid, tert.-Butylhydroperoxid und Hexamethylcyclo-4,7-diperoxynonan zusammenschmilzt.

4. Verfahren zur Herstellung von Polypropylen-Polyamid-Formmassen nach einem der Ansprüche 1 bis 3 durch Zusammenschmelzen der Komponenten A) bis C) und ggf. D) und/oder E) in einer üblichen Mischvorrichtung, vorzugsweise einem Extruder, bei einer Temperatur im Bereich von 200 bis 300°C, dadurch gekennzeichnet, daß man in einer ersten Reaktionsstufe die Komponenten A), c) und ggf. D) zusammenschmilzt, und danach in einer zweiten Reaktionsstufe der erhaltenen modifizierten Schmelze die Komponenten B) sowie ggf. die Komponenten D) und/oder E) einverleibt und die Komponenten A) bis C) sowie ggf. D) und/oder E zusammenschmilzt.

5. Verfahren nach Anspruch 4, dadurch gekennzeichnet, daß man die Komponenten A) und C) sowie ggf. D) in Gegenwart eines Radikalstarters mit einer Zerfallstemperatur $t_{1/2}$ pro Stunde größer als 140°C zusammenschmilzt.

6. Verfahren nach den Ansprüchen 1 bis 5, dadurch gekennzeichnet, daß die olefinisch ungesättigte Carbonsäure oder das olefinisch ungesättigte Carbonsäurederivat ausgewählt ist aus der Gruppe olefinisch ungesättigter Monocarbonsäuren und den entsprechenden tert.-Butylestern, den olefinisch ungesättigten Dicarbonsäuren und den entsprechenden tert.-Butylestern und olefinisch ungesättigten Dicarbonsäureanhydriden.

7. Verfahren nach den Ansprüchen 1 bis 6, dadurch gekennzeichnet, daß die olefinisch ungesättigten Carbonsäuren oder -derivate ausgewählt sind aus der Gruppe der Acrylsäure, Methacrylsäure oder ihren tert.-Butylestern, Itaconsäure, Fumarsäure, Maleinsäure oder ihren Mono- oder Di-tert.-butylestern und Maleinsäureanhydrid.

8. Verfahren nach den Ansprüchen 1 bis 7, dadurch gekennzeichnet, daß die olefinisch ungesättigten Carbonsäuren oder -derivate ausgewählt sind aus der Gruppe Itaconsäure, Fumarsäure und Maleinsäureanhydrid.

**Claims**

1. A process for the preparation of a polypropylene-polyamide molding composition comprising, in each case based on 100 parts by weight of the molding composition,

A) 10 to 89.9 parts by weight of one or more polypropylene homopolymer and/or copolymer,

B) 10 to 89.9 parts by weight of one or more polyamide,

C) 0.1 to 5.0 parts by weight of one or more olefinically unsaturated carboxylic acid and/or one or more olefinically unsaturated carboxylic acid derivative,

D) 0 to 30.0 parts by weight of an impact modifier, and

E) 0 to 60.0 parts by weight of a reinforcing agent and/or additive,

by melting together the synthesis components in a customary mixer at from 200 to 300°C, which

EP 0 406 568 B1

comprises melting together the components A) and C), based on 100 parts by weight of the molding composition, in a first reaction step and then, in a second reaction step, introducing the component B) into the modified polypropylene homopolymer and/or copolymer melt obtained, and melting the components together.

2. A process as claimed in claim 1, wherein the components A) and C) are melted together in the presence of a free-radical initiator having a decomposition temperature $t_{1/2}$ per hour of over 140°C in an amount of from 0.1 to 20% by weight, based on the weight of component C).

3. A process as claimed in claim 1, wherein the components A) and C) are melted together in the presence of a free-radical initiator selected from the group comprising cumene hydroperoxide, di-tert.-butyl hydroperoxide, tert.-butyl hydroperoxide and hexamethylcyclo-4,7-diperoxynonane.

4. A process for the preparation of a polypropylene polyamide molding composition as claimed in any of claims 1 to 3 by melting together components A) to C) and, if desired, D) and/or E) in a customary mixer, preferably an extruder, at from 200 to 300°C, which comprises melting together components A), C) and, if desired, D) in a first reaction step and then, in a second reaction step, introducing component B) and, if appropriate, components D) and/or E) into the modified melt obtained, and melting together components A) to C) and, if appropriate, D) and/or E).

5. A process as claimed in claim 4, wherein the components A) and C) and, if appropriate D) are melted together in the presence of a free-radical initiator having a decomposition temperature $t_{1/2}$ per hour of above 140°C.

6. A process as claimed in any of claims 1 to 5, wherein the olefinically unsaturated carboxylic acid or the olefinically unsaturated carboxylic acid derivative is selected from the group comprising olefinically unsaturated monocarboxylic acids and the corresponding tert.-butyl esters, olefinically unsaturated dicarboxylic acids and the corresponding tert.-butyl esters, and olefinically unsaturated dicarboxylic anhydrides.

7. A process as claimed in any of claims 1 to 6, wherein the olefinically unsaturated carboxylic acids or derivatives thereof are selected from the group comprising acrylic acid, methacrylic acid or tert.-butyl esters thereof, itaconic acid, fumaric acid, maleic acid or mono- or di-tert.-butyl esters thereof, and maleic anhydride.

8. A process as claimed in any of claims 1 to 7, wherein the olefinically unsaturated carboxylic acids or derivatives thereof are selected from the group comprising itaconic acid, fumaric acid and maleic anhydride.

## Revendications

1. Procédé de préparation de masses à mouler polypropylène-polyamide se composant, chaque fois par rapport à 100 parties en poids des masses à mouler, de
    A) 10 à 89,9 parties en poids d'au moins un homo- et/ou un copolymère de propylène,
    B) 10 à 89,9 parties en poids d'au moins un polyamide,
    C) 0,1 à 5,0 parties en poids d'au moins un acide carboxylique à insaturation oléfinique et/ou un dérivé d'acide carboxylique à insaturation oléfinique,
    D) 0 à 30,0 parties en poids d'un agent de modification de la résilience et
    E) 0 à 60,0 parties en poids d'une matière de renforcement et/ou d'un additif.
par fusion simultanée des composants structurels dans un dispositif mélangeur usuel à une température dans la gamme de 200 à 300°C, caractérisé en ce que, par rapport à 100 parties en poids des masses à mouler, on fond ensemble les composants A) et C) dans une première étape réactionnelle, puis, dans une seconde étape réactionnelle, on incorpore le composant B) dans la masse fondue d'homo- et/au de copolymère de propylène modifiée obtenue et on fond ensemble les composants.

2. Procédé selon la revendication 1, caractérisé en ce que l'on fond ensemble les composants A) et C) en présence d'un amorceur radicalaire ayant une température de décomposition $t_{1/2}$ par heure supérieure à 140°C, dans une proportion de 0,1 à 20% en poids par rapport au poids du composant C).

14

3. Procédé selon la revendication 1, caractérisé en ce que l'on fond ensemble les composants A) et C) en présence d'un amorceur radicalaire choisi dans le groupe de l'hydroperoxyde de cumène, de l'hydroperoxyde de di-tert.-butyle, de l'hydroperoxyde de tert.-butyle et de l'hexaméthylcyclo-4,7-diperocynonane.

4. Procédé de préparation de masses à mouler polypropylène-polyamide selon l'une quelconque des revendications 1 à 3 par fusion simultanée des composants A) à C) et éventuellement D) et/ou E) dans un dispositif mélangeur usuel, de préférence une extrudeuse, à une température dans la gamme de 200 à 300°C, caractérisé en ce que, dans une première étape réactionnelle, on fond ensemble les composants A), C) et éventuellement D), puis, dans une seconde étape réactionnelle, on incorpore les composants B) ainsi éventuellement que les composants D) et/ou E) dans la masse fondue modifiée obtenue et on fond ensemble les composants A) à C) ainsi éventuellement que les composants D) et/ou E).

5. Procédé selon la revendication 4, caractérisé en ce que l'on fond ensemble les composants A) à C) ainsi éventuellement que D) en présence d'un amorceur radicalaire ayant une temperature de décomposition $t_{1/2}$ par heure supérieure à 140°C.

6. Procédé selon l'une quelconque des revendications 1 à 5, caractérisé en ce que l'acide carboxylique à insaturation oléfinique ou le dérivé d'acide carboxylique à insaturation oléfinique est choisi dans le groupe des acides monocarboxyliques à insaturation oléfinique et des esters tert.-butyliques correspondants, des acides dicarboxyliques à insaturation oléfinique et des esters tert.-butyliques correspondants, ainsi que des anhydrides dicarboxyliques à insaturation oléfinique.

7. Procédé selon l'une quelconque des revendications 1 à 6, caractérisé en ce que les acides carboxyliques à insaturation oléfinique ou leurs dérivés sont choisis dans le groupe de l'acide acrylique, de l'acide méthacrylique ou de leurs esters tert.-butyliques, de l'acide itaconique, de l'acide fumarique, de l'acide maléique ou de leurs esters mono- ou di-tert.-butyliques et de l'anhydride maléique.

8. Procédé selon l'une quelconque des revendications 1 à 7, caractérisé en ce que les acides carboxyliques à insaturation oléfinique ou leurs dérivés sont choisis dans le groupe de l'acide itaconique, de l'acide fumarique et de l'anhydride maléique.